# EUROPÄISCHE PATENTSCHRIFT

(11) **EP 0 498 322 B1**
(45) Veröffentlichungstag und Bekanntmachung des Hinweises auf die Patenterteilung: **18.06.1997**
(21) Anmeldenummer: 92101683.8
(22) Anmeldetag: 01.02.1992
(51) Int. Cl.: F16L 17/04, F16L 21/00

(54) **Vorrichtung zum abgedichteten Verbinden der glattzylindrischen Enden zweier Rohre**
Device for the sealed connection of the smoothed cylindrical ends of two pipes
Dispositif d'étanchéité pour l'assemblage de deux extrémités à tuyaux cylindriques et lisses

(30) Priorität: 07.02.1991 DE 4103701
(43) Veröffentlichungstag der Anmeldung: 12.08.1992
(73) Patentinhaber: MERO Systeme GmbH & Co. KG, 97084 Würzburg (DE)
(72) Erfinder: Knappe, Dieter, W-8702 Zell (DE)
(74) Vertreter: Böck, Bernhard

(56) Entgegenhaltungen:
- EP-A- 0 184 783
- DE-A- 3 501 583
- DE-A- 3 605 020
- DE-C- 3 710 852

## Beschreibung

Die Erfindung bezieht sich auf eine Vorrichtung zum abgedichteten Verbinden der glattzylindrischen Enden zweier Rohre.

Eine Rohrverbindungsvorrichtung ist durch die DE-PS 34 04 739 bekannt. Zur Erhöhung der Quersteifigkeit und zur Verbesserung der Axialsicherung der Rohrverbindung sind an beiden Außenrändern des Schellenbandes dieser Rohrkupplung schräg radial nach innen abgewinkelte Flansche vorgesehen, die beim Anziehen der Spannschraube und der dadurch bedingten Kontraktion des Schellenbandes und der Dichtmanschette gegen die Außenumfangsflächen der zu verbindenden Rohre gedrückt werden. Dadurch ergibt sich jedoch über das metallische Schellenband eine unerwünschte Schallbrücke von Rohr zu Rohr. Außerdem bildet die Dichtmanschette dieser bekannten Rohrkupplung gegenüber beiden Seiten ihres radial nach innen ragenden, mittigen ringförmigen Stegs nur jeweils einen durch die Dichtlippe erzeugten Dichtbereich, was in gewissen Fällen ungenügend sein kann.

Aus der DE-PS 37 10 852 ist eine abdichtende Rohrverbindungseinrichtung bekannt, bei der zur axialen Sicherung der miteinander zu verbindenden Rohrenden metallische Sicherungseinrichtungen verwendet werden, die beidseitig einer Dichtmanschette in den äußeren Randbereichen eines Schellenbands angeordnet sind und dieses mit den Rohrenden verbinden.

Die DE-OS 36 05 020 zeigt eine Rohrverbindungseinrichtung, bei der die Axialsicherung ebenfalls nicht über die Dichtmanschette, sondern vielmehr über in den Außenumfang der Rohre eingreifende, metallische Flanken des Schellenbands realisiert wird.

Weitere abdichtende Rohrverbindungseinrichtungen sind aus der EP-A1 0 184 783 und aus der DE-OS 35 01 583 bekannt.

Den in den eingangs genannten Druckschriften DE-PS 37 10 852, DE-OS 36 05 020 und DE-PS 34 04 739 offenbarten abdichtenden Rohrverbindungsvorrichtungen ist aufgrund des metallischen Kontakts zwischen dem Schellenband und den zu verbindenden Rohrenden die Ausbildung der vorstehend erwähnten, nachteiligen Schallbrücke gemeinsam.

Der vorliegenden Erfindung liegt die Aufgabe zugrunde, eine Vorrichtung zum abgedichteten Verbinden der glattzylindrischen Enden zweier Rohre zu schaffen, die eine wirksame Axialsicherung und hohe Quersteifigkeit aufweist, ohne daß das Schellenband eine Schallbrücke zwischen den zu verbindenden Rohren bildet, und die darüber hinaus eine möglichst geringe Teileanzahl aufweist.

Diese Aüfgabe wird durch eine vorrichtung gemäß Anspruch 1 gelöst.

Bei der erfindungsgmäßen Vorrichtung ist neben jedem Außenrand des Schellenbandes eine relativ schmale umlaufende Sicke vorgesehene, die in je einen Randabschnitt der Dichtmanschette mit einem muldenförmigen Querschnitt passend eingreift, und das Schellenband ist im Anschluß an die randseitigen Sicken nach außen mit derart radial nach innen ragenden Flanschen versehen, daß diese bei kontraktiertem Schellenband die Außenränder der Randabschnitte der Dichtmanschette mit muldenförmigem Querschnitt überlappen, jedoch gegenüber dem Außenumfang der verbundenen Rohre ein radiales Spiel einhalten. Die radial nach innen ragenden Flansche an den Außenseiten des Schellenbandes verhindern einerseits, daß das elastische Material der Dichtmanschette bei gespannter Spannschelle nach außen entweicht, andererseits weisen sie jedoch gegenüber dem Außenumfang der verbundenen Rohre ein radiales Spiel auf, wodurch sichergestellt ist, daß eine Schallbrücke zwischen den verbundenen Rohren durch das Schellenband ausgeschlossen ist. Die verbesserte Quersteifigkeit der Rohrverbindung, d. h. der erhöhte Widerstand der Vorrichtung gegen eine Abwinkelung der Rohre im Verbindungsbereich, deren Achsen im Idealfall koaxial verlaufen, wird dadurch erreicht, daß jedes Rohr gegenüber dem mittigen ringförmigen Steg der Dichtmanschette an zwei axial beabstandeten Ringzonen durch das Schellenband über die Dichtmanschette gehalten wird. Die eine Ringzone befindet sich unmittelbar neben dem ringförmigen Steg und wird durch die mittig umlaufende Sicke des Schellenbandes, welche passend in eine ringförmige Vertiefung am Außenumfang der Dichtmanschette eingreift, bewirkt, während die andere Ringzone durch die randseitigen schmalen, umlaufenden Sicken am Schellenband erzeugt wird, die in je einen Randabschnitt der Dichtmanschette mit einem muldenförmigen Querschnitt passend eingreifen. Die Dichtmanschette weist daher gegenüber jeder Seite ihres mittigen ringförmigen Stegs, in Achsrichtung betrachtet, auch drei ringförmige Dichtbereiche auf, wobei der mittlere Dichtbereich jeweils durch die ringförmigen Dichtlippen gebildet wird, deren Material beim Spannen des Schellenbandes zwischen der mittigen umlaufenden Sicke und den randseitigen Sicken des Schellenbandes eingeschlossen und gegen den Außenumfang der Rohre gepresst wird.

Schließlich heisen die beiden randseitigen umlaufenden Sicken des Schellenbandes eine größere Tiefe auf als die mittige umlaufende Sicke. Beim Spannen des Schellenbandes können dadurch die Randzonen der Dichtmanschette stärker gegen die Außenumfänge der zu verbindenden Rohre gepresst werden als der mittlere Bereich der Dichtmanschette und folglich sind auch die dort an den verbundenen Rohren angreifenden Haltekräfte entsprechend hoch. Dies wirkt sich wiederum günstig auf die Axialsicherung der durch die erfindungsgemäße Vorrichtung verbundenen Rohre aus.

Ausgestaltungen der Erfindung gehen aus den Unteransprüchen hervor. So weisen die randseitigen Sicken des Schellenbandes und die diese Sicken aufnehmenden Randabschnitte der Dichtmanschette im wesentlichen V-förmige Querschnitte mit abgerundetem Grund bzw. Rand auf. Dadurch kann die Dichtmanschette randseitig stark gegen die Außenumfangsfläche der verbindenden Rohre gepresst werden, wobei der im Schnitt betrachtet abgerundete ringförmige innere Rand der Randabschnitte der Dichtmanschette gleichsam wie ein Segment eines O-Dichtungsringes wirkt.

Um die axiale Gesamtlänge der Verbingundsvorrichtung relativ kurz zu halten, grenzen gemäß einer weiteren Ausgestaltung der Erfindung die Randabschnitte der Dichtmanschette mit im wesentlichen V-förmigem Querschnitt axial nach innen an die ringförmigen Dichtlippen an.

Zur Erzielung einer guten Dichtwirkung der ringförmigen Dichtlippen weisen nach noch einer weiteren Ausgestaltung der Erfindung die ringförmigen Dichtlippen der Dichtmanschette eine größere radiale Erstreckung nach innen auf als die Randabschnitte der Dichtmanschette mit im wesentlichen V-förmigem Querschnitt.

Noch eine weitere Ausführungsform der Erfindung ist dadurch gekennzeichnet, daß innerste Dichtbereiche der Dichtmanschette durch Innenwandabschnitte gebildet sind, welche sich vom mittigen Steg weg mit zunehmend kleiner werdenden Durchmesser nach außen erstrecken. Diese abgeschrägten Innenwandabschnitte der Dichtmanschette werden beim Spannen des Schellenbandes durch dessen mittige umlaufende Sicke gegen den Außenumfang der zu verbindenden Rohre gepreßt.

Noch eine weitere Ausführungsform der Erfindung ist dadurch gekennzeichnet, daß die axiale Ausdehnung bzw. Breite der mittigen umlaufenden Sicke des Schellenbandes ein Mehrfaches von derjenigen der beiden randseitigen umlaufenden Sicken beträgt.

Die Erfindung wird anschließend anhand der Zeichnungen eines Ausführungsbeispiels erläutert. Es zeigen:
- Fig. 1: eine Stirnansicht der erfindungsgemäßen Verbindungsvorrichtung ohne die zu verbindenden Rohre im entspannten Zustand;
- Fig. 2: eine Schnittansicht entlang der Linie II - II in Fig. 1;

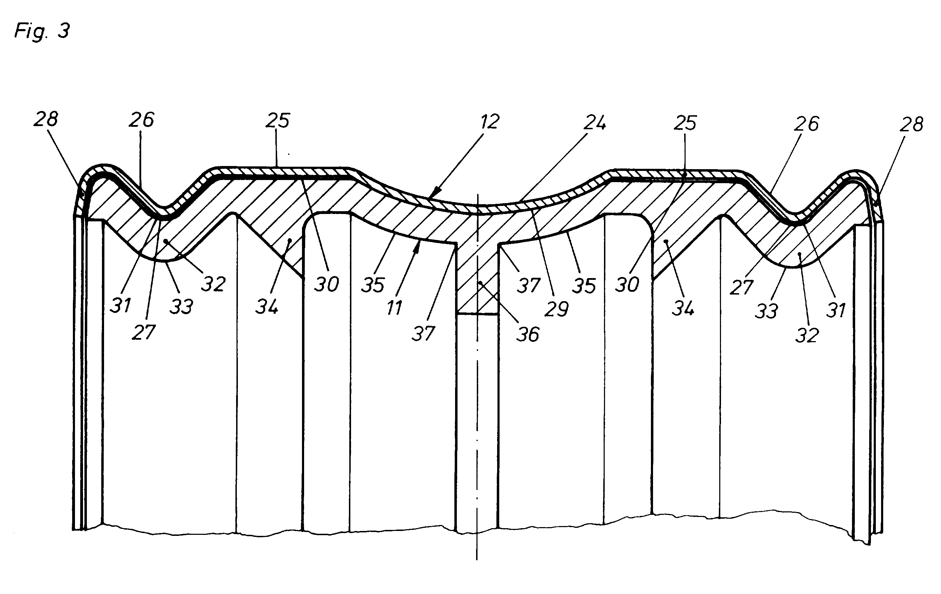

- Fig. 3: eine Teil-Querschnittsansicht der in der Vorrichtung nach den Figuren 1 und 2 verwendeten Dichtmanschette und des Schellenbandes im vergrößerten Maßstab und
- Fig. 4: eine der Fig. 3 ähnliche Teil-Schnittansicht, welche jedoch die mittels des Schellenbandes kontraktierten Dichtmanschette in Verbindung mit den Enden zweier Rohre zeigt.

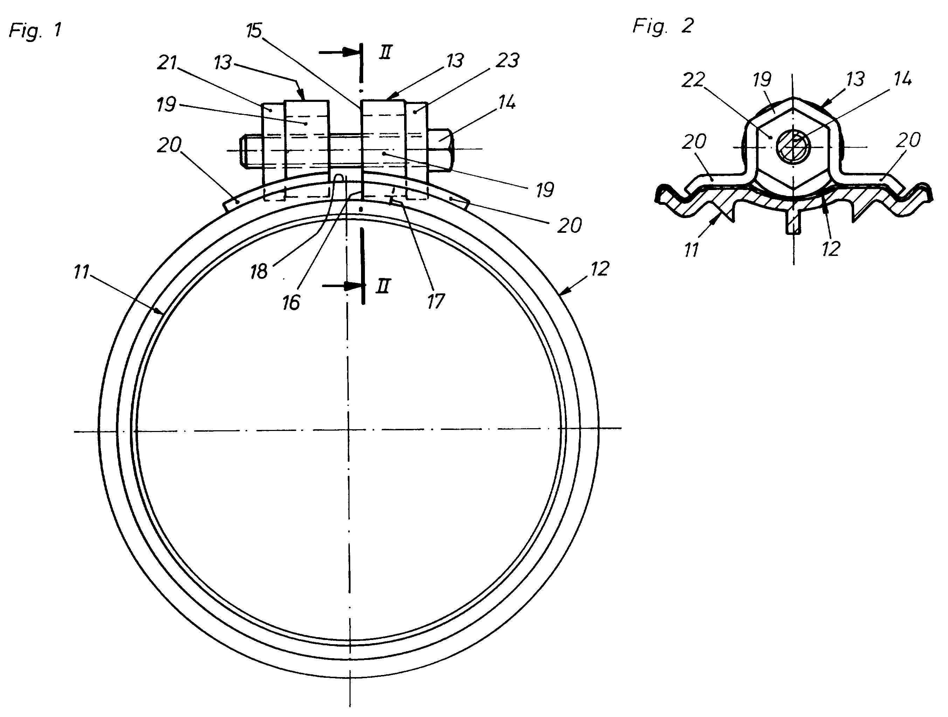

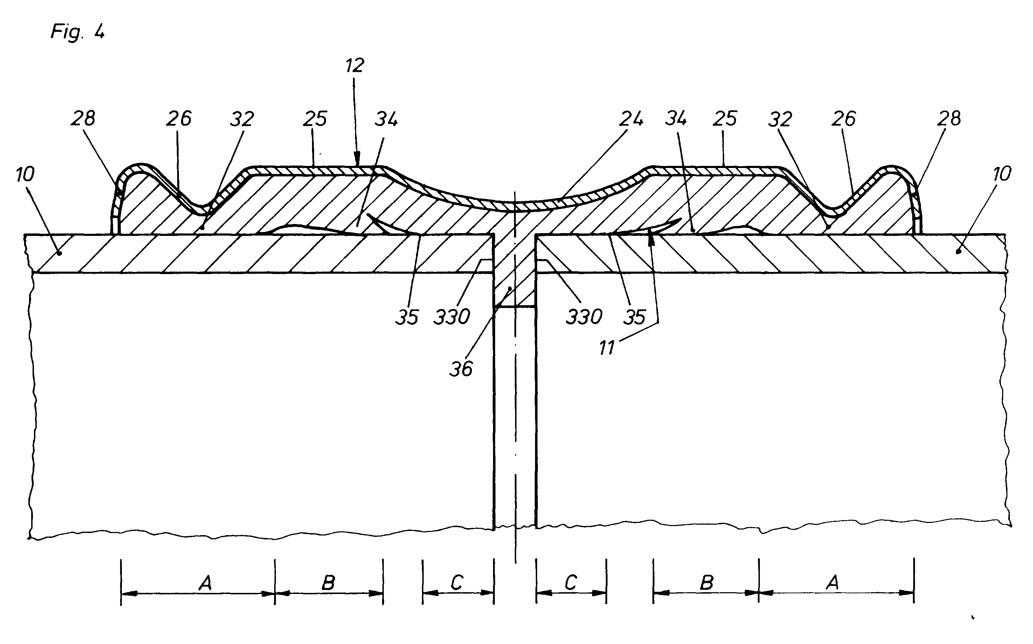

Die in Fig. 1 abgebildete Vorrichtung dient zur abgedichteten Verbindung der glattzylindrischen Enden von zwei Rohren 10, (Fig. 4), welche z. B. Abwasserrohre aus Gußeisen oder Stahl sein können. Die Vorrichtung enthält eine Dichtmanschette 11 aus elastomerem Material und ein Schellenband 12 aus vorzugsweise Edelstahl, welches zum Kontraktieren der Dichtmanschette 11 dient. An jedem Ende des Schellenbandes 12 ist zu diesem Zweck ein im wesentlichen radial nach außen abstehender Spannbacken 13 befestigt, die mittels einer Spannschraube 14 gegeneinander gezogen werden können, um den Innendurchmesser des Schellenbandes 12 zu verkleinern. Im einzelnen ist der gem. Fig. 1 rechte Spannbacken 13 an dem einen Ende des Schellenbandes 13 so befestigt, daß sein linker Rand 15 mit dem einen Ende 16 des Schellenbandes 12 fluchtet, während der gem. Fig. 1 linke Spannbacken 13 in einem gewissen Abstand vom anderen Ende 17 des Schellenbandes 12 angeordnet ist, um einen Überbrückungsabschnitt 18 zwischen den Spannbacken 13 auszubilden, so daß der gesamte Außenumfang der Dichtmanschette 11 vom Schellenband 12 umfaßt ist.

Die zwei Spannbacken 13 sind gleichartig ausgebildet und sie weisen jeweils einen kantig ausgebildeten Bügel 19 mit zwei Befestigungslaschen 20 auf. In den Bügel 19 der gem. Fig. 1 linken Spannbacke 13 ist passend eine Sechskant-Mutter mit einem Außenbund 21 drehfest eingesetzt, in welche der Gewindeschaft der Spannschraube 14 eingedreht ist. Der Gewindeschaft der Spannschraube 14 erstreckt sich ferner axial verschieblich durch eine in dem kantigen Bügel 19 der rechten Spannbacke 13 passend eingesetzten Sechskant-Buchse 22 mit einem Außenbund 23.

Das Schellenband 12 weist eine mittig angeordnete, im Schnitt bogenförmige flache sowie umlaufende Sicke 24 auf, an die sich in beiden Richtungen nach außen ein ebenflächiger Abschnitt 25 anschließt. An diese Abschnitte 25 grenzen umlaufende Sicken 26 mit im wesentlichen V-förmigem Querschnitt und abgerundetem Rand 27 an. Den Sicken 26 folgen nach außen radial nach innen ragende Flansche 28.

Die Dichtmanschette 11 hat an ihrer Außenseite eine Querschnitts-Kontur, die derjenigen der Innenseite des Schellenbandes 12 entspricht. Dies bedeutet, daß die Sicke 24 des Schellenbandes 12 in eine ringförmige Vertiefung 29 am Außenumfang der Dichtmanschette 11 passend eingreift. Die ebenflächigen Abschnitte 25 erstrecken sich über entsprechend ebenflächige Abschnitte 30 der Dichtmanschette 11 und die Sicken 26 des Schellbandes 12 greifen passend in im wesentlichen V-förmige Mulden 31 von Randabschnitten 32 der Dichtmanschette 11 ein. Der Querschnitt dieser Randabschnitte 32 der Dichtmanschette 11 ist ingesamt V-förmig, wobei ihr innerer Rand 33 abgerundet ist. Axial nach innen folgt den Randabschnitten 32 jeweils eine ringförmige Dichtlippe 34 und in einem gewissen axialen Abstand folgen dann nach innen abgeschrägte Innenwandabschnitte 35 mit zunehmend kleiner werdenden Innendurchmesser, welche an einem mittig angeordneten, radial nach innen ragenden ringförmigen Steg 36 enden. Dieser Steg 36 dient als Anschlag für die Stirnenden 330 der Rohre 10 (Fig. 4). Im entspannten Zustand der Dichtmanschette 11 erstrecken sich die ringförmigen Dichtlippen 34 weiter radial nach innen als die Randabschnitte 32 mit in wesentlichen V-förmigen Querschnitt. Der kleinste Innendurchmesser dieser Randabschnitte 32 der Dichtmanschette 11 entspricht etwa dem Außendurchmesser der Rohre 10.

Beim Einstecken der glattzylindrischen Enden der Rohre 10 in die Vorrichtung bzw. Dichtmanschette 11 werden die Dichtlippen 34 nach innen umgebogen und die schrägen Innenwandabschnitte 35 dienen als Führung für die Rohrenden, bis die Stirnenden 330 der Rohre 10 an dem ringförmigen Steg 36 anliegen. Die Außendurchmesser der Rohre 10 schwanken in einem gewissen Toleranzbereich und die Dichtmanschette 11 ist unter Berücksichtigung dieses Toleranzbereichs so bemessen, daß die Stirnenden 330 der Rohre 10 entweder unmittelbar in den Ecken 37 oder etwas radial nach innen versetzt von diesen Ecken 37 zu liegen kommen. Die Dichtmanschette 11 befindet sich in dieser Montagephase im entspannten Zustand. Zur Herstellung der abgedichteten Rohrverbindung wird das Schellenband 12 mittels der Spannschraube 14 in Umfangsrichtung zusammengezogen und dadurch die Dichtmanschette 11 kontraktiert. Dabei werden die Randabschnitte 32 der Dichtmanschette 11, die Dichtlippen 34 und Teile der abgeschrägten Innenwandabschnitte 35 in Form von Ringzonen gegen den Außenumfang der Rohre 10 gepresst. Auf diese Weise werden gegenüber beiden Seiten des mittleren ringförmigen Stegs 36 der Dichtmanschette 11 jeweils drei Dichtbereiche A, B und C geschafften( Fig. 4), deren axiale Länge auch vom Grad der Vorspannung der Dichtmanschette 11 abhängig ist und in gewissen Grenzen eingestellt werden kann.

Da beim Ausführungsbeispiel die beiden randseitigen Sicken 26 des Schellenbandes 12 eine größere Tiefe aufweisen als die mittige umlaufende Sicke 24 und der kleinste Innendurchmesser der Randabschnitte 32 der Dichtmanschette 11 kleiner ist als der kleinste Innendurchmesser der schrägen Innenwandabschnitte 35, wird das Material der Dichtmanschette 11 in den Dichtungsbereichen A stärker verpresst als in den Dichtungsbereichen C, aber auch stärker als in den Dichtungsbereichen B, denn das Material der Dichtlippen 34 kann axial nach innen ausweichen.

Bei kontraktiertem Schellenband 12 bzw. fertiger Rohrverbindung überlappen die Flansche 28 die Außenränder der Randabschnitte 32, so daß das Material der Dichtmanschette 11 nicht nach außen entweichen kann. Jedoch ist die radiale Erstreckung der Flansche 28 nach innen so bemessen, daß bei kontraktiertem Schellenband 12 die inneren Ränder der Flansche 28 gegenüber dem Außenumfang der Rohre 10 ein radiales Spiel einhalten. Auf diese Weise ist eine Schallbrücke durch das metallische Schellenband 12 von einem Rohr 10 zum anderen Rohr 10 vermieden. Die drei Dichtbereiche A, B, C gegenüber jeder Seite des mittleren ringförmigen Stegs 36 verbessern die Dichtfunktion dieser Rohrverbindung und die stark verpressten Randabschnitte 32 der Dichtmanschette 11 sowie Ringzonen im Bereich der Innenwandabschnitte 35 ergeben in Vergleich zum Stand der Technik eine erhöhte Quersteifigkeit und verbesserte Axialsicherung der Rohrverbindungen.

## Patentansprüche

1. Vorrichtung zum abgedichteten Verbinden der glattzylindrischen Enden zweier Rohre mit einer Dichtmanschette und einem Schellenband zur Kontraktion der Dichtmanschette, wobei die Dichtmauschette an ihrem Innenumfang einen mittig angeordneten, radial nach innen ragenden, ringförmigen Steg als Anschlag für die Stirnenden der einzusteckenden Rohre und an den Außenrandbereichen wenigstens je eine ringförmige Dichtlippe aufweist, wobei das Schellenband an seinen Enden mit im wesentlichen radial nach außen abstehenden Spannbacken versehen ist, durch die sich eine Spannschraube zur Kontraktion des Schellenbandes erstreckt, und eine mittige umlaufende Sicke, die passend in eine umlaufende Vertiefung am Außenumfang der Dichtmanschette eingreift und je eine weitere umlaufende Sicke (26) an beiden Außenrändern aufweist beiderseits der mittigen umlaufenden Sicke in jedem Randabschnitt des Schellenbandes (12), die in je eine in den Randabschnitten (32) der Dichtmanschette vorgesehene umlaufende Vertiefung, die dadurch gebildet ist, daß die Dichtmanschette in diesem Abschnitt eine Querschnittsform aufweist, die im wesentlichen der Querschnittsform der randseitigen Sicken entspricht, passend eingreift, und daß das Schellenband (12) im Anschluß an die randseitigen Sicken (26) axial außen mit derart radial nach innen ragenden Flanschen (28) versehen ist, daß diese bei kontraktiertem Schellenband (12) die Außenränder der Randabschnitte (32) der Dichtmanschette (11) übergreifen, jedoch gegenüber dem Außenumfang der verbundenen Rohre (10) ein radiales Spiel einhalten, und die beiden randseitigen umlaufenden Sicken (26) des Schellenbandes (12) eine größere Tiefe aufweisen als die mittige umlaufende Sicke (24).

2. Vorrichtung nach Anspruch 1, dadurch gekennzeichnet, daß die randseitigen Sicken (26) des Schellenbandes (12) und die diese Sicken (26) aufnehmenden Randabschnitte (32) der Dichtmanschette (11) im wesentlichen V-förmige Querschnitte mit abgerundetem Grund bzw. Rand (33) aufweisen.

3. Vorrichtung nach Anspruch 2, dadurch gekennzeichnet, daß die Randabschnitte (32) der Dichtmanschette (11) mit im wesentlichen V-förmigem Querschnitt axial nach innen an die ringförmigen Dichtlippen (34) angrenzen.

4. Vorrichtung nach Anspruch 3, dadurch gekennzeichnet, daß die ringförmigen Dichtlippen (34) der Dichtmanschette (11) eine größere radiale Erstreckung nach innen aufweisen als die Randabschnitte (32) der Dichtmanschette (11) mit im wesentlichen V-förmigem Querschnitt.

5. Vorrichtung nach einem der Ansprüche 1 - 4, dadurch gekennzeichnet, daß innerste Dichtbereiche (C) der Dichtmanschette (11) durch Innenwandabschnitte (35) gebildet sind, welche sich vom mittigen Steg (36) weg mit zunehmend kleiner werdenden Durchmesser nach außen erstrecken.

6. Vorrichtung nach Anspruch 1, dadurch gekennzeichnet, daß die axiale Ausdehnung bzw. Breite der mittigen umlaufenden Sicke (24) des Schellenbandes (12) ein Mehrfaches von derjenigen der beiden randseitigen umlaufenden Sicken (26) beträgt.

## Claims

1. A device for the sealed connection of the smoothcylindrical ends of two pipes with a sealing sleeve and a clamp hoop for the contraction of the sealing sleeve, the sealing sleeve comprising on its internal circumference a centrally arranged, radially inwardly projecting annular web as an abutment for the end faces of the pipes which are to be inserted and in its peripheral regions comprising at least one annular sealing lip in each case, the clamp hoop being provided at its ends with substantially radially outwardly projecting clamping jaws, through which a clamping screw extends for the contraction of the clamp hoop, and a central circumferential corrugation, which engages snugly in a circumferential recess on the outer circumference of the sealing sleeve and one further circumferential corrugation (26) at each of the outer edges on either side of the central circumferential corrugation in each edge section of the clamp hoop (12), which engage snugly in each case in a circumferential recess provided in the edge sections (32) of the sealing sleeve, said recess being formed in that the sealing sleeve has a cross sectional form in this section substantially corresponding to the cross sectional form of the peripheral corrugations, and at its axial outer ends adjoining the peripheral corrugations (26) the clamp hoop (12) is provided with flanges (28) which project radially inwards in such a manner that they overlap the outer edges of the edge sections (32) of the sealing sleeve (11) when the clamp hoop (12) is contracted, but maintain a radial clearance relative to the outer circumference of the connected pipes (10), and the two peripheral circumferential corrugations (26) of the clamp hoop (12) have a greater depth than the central circumferential corrugation (24).

2. A device according to claim 1, characterised in that the peripheral corrugations (26) of the clamp hoop (12) and the edge sections (32) of the sealing sleeve (11) receiving said corrugations (26) have substantially V-shaped cross sections with a rounded base or edge (33).

3. A device according to claim 2, characterised in that the edge sections (32) of the sealing sleeve (11) adjoin the annular sealing lips (34) on the inside in the axial direction with a substantially V-shaped cross section.

4. A device according to claim 3, characterised in that the annular sealing lips (34) of the sealing sleeve (11) have a larger radial extension towards the inside than the edge sections (32) of the sealing sleeve (11) with the substantially V-shaped cross section.

5. A device according to one of claims 1 to 4, characterised in that the innermost sealing region (C) of the sealing sleeve (11) is formed by inner wall sections (35), which extend outwards away from the central web (36) with a decreasing diameter.

6. A device according to claim 1, characterised in that the axial extension or width of the central circumferential corrugation (24) of the clamp hoop (12) is a multiple of that of the two peripheral circumferential corrugations (26).

## Revendications

1. Dispositif pour réunir d'une manière étanche les extrémités cylindriques lisses de deux tubes avec un manchon d'étanchéité et un collier de serrage servant à contracter le manchon d'étanchéité, et dans lequel le manchon d'étanchéité comporte sur sa circonférence intérieure, une barrette annulaire médiane qui fait saillie radialement vers l'intérieur et sert de butée pour les extrémités avant des tubes devant être enfichés et possède, au niveau des parties marginales extérieures, au moins une lèvre d'étanchéité annulaire respective, le collier de serrage comporte, à ses extrémités, des mâchoires de serrage qui font saillie essentiellement radialement vers l'extérieur et qui sont traversées par une vis de serrage servant à contracter le collier de serrage, et une moulure médiane circonférentielle, qui s'engage d'une manière adaptée dans un renfoncement circonférentiel présent dans la périphérie extérieure du manchon d'étanchéité, et possède respectivement une autre moulure circonférentielle (26) située sur les deux bords extérieurs, des deux côtés de la moulure circonférentielle médiane dans chaque partie marginale du collier de serrage (12), et qui s'engage d'une manière adaptée dans un renfoncement circonférentiel respectif, qui est prévu dans les parties marginales (32) du manchon d'étanchéité et est formé de telle sorte que le manchon d'étanchéité possède dans cette partie une forme en coupe transversale qui correspond essentiellement à la forme en coupe transversale des moulures marginales, et que le collier de serrage (12) comporte extérieurement du point de vue axial, à la suite des moulures marginales (26), des brides (28), qui s'étendent radialement vers l'intérieur de telle sorte que, lorsque le collier de serrage (12) est contracté, ces brides s'engagent au-dessus des bords extérieurs des parties marginales (32) du manchon d'étanchéité (11), mais conservent un jeu radial par rapport à la périphérie extérieure des tubes (10) réunis, et les deux moulures circonférentielles marginales (26) du collier de serrage (12) possèdent une profondeur supérieure à celle de la moulure médiane circonférentielle (24).

2. Dispositif selon la revendication 1, caractérisé en ce que les moulures marginales (26) du collier de serrage (12) et les parties marginales (32) du manchon d'étanchéité (11), qui reçoivent ces moulures (26), possèdent des sections transversales essentiellement en forme de V avec un fond ou un bord arrondi (33).

3. Dispositif selon la revendication 2, caractérisé en ce que les parties marginales (32) du manchon d'étanchéité (11) possédant une section transversale essentiellement en forme de V jouxtent, axialement vers l'intérieur, les lèvres d'étanchéité annulaires (34).

4. Dispositif selon la revendication 3, caractérisé en ce que les lèvres d'étanchéité annulaires (34) du manchon d'étanchéité (11) possèdent, en direction de l'intérieur, une étendue radiale supérieure à celle des parties marginales (32) du manchon d'étanchéité (11) ayant une section transversale essentiellement en forme de V.

5. Dispositif selon l'une des revendications 1-4, caractérisé en ce que les zones d'étanchéité les plus intérieures (C) du manchon d'étanchéité (11) sont formées par des éléments de paroi intérieurs (35), qui s'étendent vers l'extérieur à partir de la barrette médiane (36), avec un diamètre de plus en plus petit.

6. Dispositif selon la revendication 1, caractérisé en ce que l'étendue ou la largeur axiale de la moulure circonférentielle médiane (24) du collier de serrage (12) est égale à un multiple de celle des deux moulures circonférentielles marginales (26).
